# EUROPEAN PATENT APPLICATION

(11) **EP 4 624 080 A1**
(43) Date of publication of application: **01.10.2025**
(21) Application number: 24166954.8
(22) Date of filing: 27.03.2024
(51) Int. Cl.: B23C 5/10, B23C 5/22

(54) **TOOL BODY OF A ROTARY CUTTING TOOL AND ROTARY CUTTING TOOL COMPRISING SUCH A TOOL BODY**

(71) Applicant: AB Sandvik Coromant, 811 81 Sandviken (SE)
(72) Inventor: LEHTO, Ralf, 811 81 Sandviken (SE); NORMAN, Andreas, 81181 Sandviken (SE); LUNDSTRÖM, David, 811 81 Sandviken (SE)
(74) Representative: Sandvik

(57) **Abstract**

A tool body (2) of a rotary cutting tool comprising at least one insert seat (10) provided in the tool body at a transition between a front face (2c) and a peripheral surface (2d) of the tool body (2), wherein said at least one insert seat (10) comprises:
- a tangentially facing bottom surface (12) and an internal wall (14) that extends transversely to the bottom surface (12); and
- a stress relief groove (20) forming a transition between the bottom surface (12) and the internal wall (14) and having a, first end (20a) ending in the front face or peripheral surface of the tool body.

Said stress relief groove comprises a stress relief surface (22) that has an elliptical cross-sectional shape and that extends from said first end (20a) of the stress relief groove along at least a part of the length of the stress relief groove.

## Description

### FIELD OF THE INVENTION AND PRIOR ART

The present invention relates to a tool body of a rotary cutting tool according to the preamble of claim 1. The invention also relates to a rotary cutting tool comprising such a tool body.

A rotary cutting tool may be used for performing milling or drilling operations on a workpiece. A rotary cutting tool may be provided with several cutting inserts detachably mounted in a respective insert seat in a tool body of the rotary cutting tool. Each individual cutting insert may be provided with several identical cutting edges, to thereby allow each cutting insert to be turned into different working positions. When a cutting edge of a cutting insert has been worn out, the cutting insert may be repositioned in its insert seat and mounted in a new working position with another cutting edge in an active cutting position. As illustrated for instance in WO 2023/117168 A1 and WO 2023/174688 A1, a rotary cutting tool of this type may be provided with one or more insert seats arranged in the tool body at a transition between a front face and a peripheral surface of the tool body, wherein each one of these insert seats is open towards the front face of the tool body in order to allow a cutting insert mounted in the insert seat to project in the axial direction of the tool body beyond a front end thereof and also open towards the peripheral surface of the tool body in order to allow a cutting insert mounted in the insert seat to project in the radial direction of the tool body beyond the peripheral surface thereof. This type of insert seat may comprise a flat and substantially tangentially facing bottom surface configured to abut against a tangential abutment surface on a cutting insert when the cutting insert is mounted in the insert seat, and an internal wall that extends transversely to the bottom surface and that at a first end adjoins to the front face of the tool body and at a second end adjoins to the peripheral surface of the tool body. During machining operations, high stresses may be exerted on the tool body via the cutting inserts due to the cutting forces. The stress concentration is typically at the highest at a transition between the substantially tangentially facing bottom surface and the internal wall in the insert seats at an area close to the front face of the tool body or at an area close to the peripheral surface of the tool body. In order to reduce the stress concentration at these areas of the tool body, one or more stress relief grooves may be provided at the transition between said bottom surface and said internal wall in each one of said insert seats. An insert seat designed to receive a cutting insert with a round basic shape may be provided with one single stress relief groove that extends in a curved path all along the internal wall of the insert seat such that the stress relief groove at a first end ends in the front face of the tool body and at a second end ends in the peripheral surface of the tool body. An insert seat designed to receive a cutting insert with a polygonal basic shape, such as for instance a quadrangular basic shape, may as an alternative be provided with a first stress relief groove that extends between a first part of the internal wall and the bottom surface of the insert seat in an essentially straight line from the front face of the tool body and a second stress relief groove that extends between another part of the internal wall and the bottom surface of the insert seat in an essentially straight line from the peripheral surface of the tool body, as illustrated in WO 2023/117168 A1. A stress relief groove of the type here in question typically has a circular cross-sectional shape.

### OBJECT OF THE INVENTION

The object of the present invention is to provide a tool body for a rotary cutting tool of the above-mentioned type that has a new and favourable design.

### SUMMARY OF THE INVENTION

According to the invention, said object is achieved by means of a tool body having the features defined in claim 1.

The tool body according to the invention has a front end and an opposite rear end, the rear end being configured for attachment to a machine, wherein a longitudinal centre axis of the tool body extends between the rear end and the front end of the tool body and wherein the tool body has an axially forwardly facing front face at its front end and a peripheral surface that adjoins to the front face and extends from the front face towards the rear end of the tool body, the tool body comprising at least one insert seat provided in the tool body at a transition between the front face and the peripheral surface of the tool body, wherein said at least one insert seat:
- comprises a space configured to accommodate a detachably mounted cutting insert, wherein this space is open towards the front face of the tool body in order to allow a cutting insert mounted in the insert seat to project in the axial direction of the tool body beyond the front end thereof and also open towards the peripheral surface of the tool body in order to allow a cutting insert mounted in the insert seat to project in the radial direction of the tool body beyond the peripheral surface thereof;
- comprises a substantially tangentially facing bottom surface configured to abut against a tangential abutment surface on a cutting insert when the cutting insert is mounted in the insert seat, and an internal wall that extends transversely to the bottom surface and delimits said space together with the bottom surface and that at a first end adjoins to the front face of the tool body and at a second end adjoins to the peripheral surface of the tool body, wherein said bottom surface is substantially flat and extends in a first plane;
- comprises at least one stress relief groove that forms a transition between at least a part of the bottom surface and the internal wall of the insert seat and that at a first end ends in the front face or the peripheral surface of the tool body, wherein this stress relief groove has a first longitudinal edge through which the stress relief groove adjoins to the bottom surface of the insert seat and an opposite second longitudinal edge through which the stress relief groove adjoins to the internal wall of the insert seat, and wherein this stress relief groove has a first groove part that adjoins to said first longitudinal edge, is depressed in relation to the bottom surface of the insert seat and located on a first side of said first plane, and an adjacent second groove part that adjoins to said second longitudinal edge and is located on an opposite second side of said first plane.

Thus, said stress relief groove is so positioned in relation to the bottom surface that the above-mentioned first plane, i.e. the plane that contains the bottom surface, intersects the stress relief groove at a position between the two longitudinal edges thereof.

Said stress relief groove comprises a stress relief surface that has an elliptical shape as seen in any cross-section of the stress relief groove that is perpendicular to a longitudinal axis of the stress relief groove and intersects this stress relief surface, wherein:
- said elliptically shaped stress relief surface extends in a longitudinal direction of the stress relief groove from said first end of the stress relief groove along at least a part of the length of the stress relief groove; and
- said elliptically shaped stress relief surface, in each cross-section of the stress relief groove that is perpendicular to a longitudinal axis of the stress relief groove and intersects the elliptically shaped stress relief surface, extends at least from a deepest point in said first groove part to a point in said second groove part.

It has been observed that the highest stress concentration in any cross-section of a stress relief groove of the above-mentioned type occurs rather close to the point where said first plane intersects the stress relief groove, i.e. rather close to the point where the above-mentioned first and second groove parts meet each other. Furthermore, as mentioned above, the stress concentration at the transition between the bottom surface and the internal wall in an insert seat of the type here in question is typically at the highest at an area close to the front face of the tool body or at an area close to the peripheral surface of the tool body. According to the invention, the stress relief groove arranged between the bottom surface and the internal wall of the insert seat is consequently provided with an elliptically shaped stress relief surface with the above-mentioned design in the area of the stress relief groove where the highest stress concentration occurs during a machining operation. By means of the elliptically shaped stress relief surface, it will be possible to provide the stress relief groove with a large radius of curvature at the above-mentioned high stress area in a more space-saving manner as compared to the case with a stress relief groove having a conventional stress relief surface with a circular cross-sectional shape. The larger the radius of curvature of the stress relief surface at the high stress area of the stress relief groove, the smaller the maximum stress concentration of the tool body. By enabling a larger radius of curvature of the stress relief surface at the high stress area, the maximum stress concentration may be reduced, which in its turn implies that the required thickness of material in the part of the tool body behind the bottom surface of the insert seat, as seen in the direction of rotation of the tool body, is reduced. This reduction of the required thickness of material in the part of the tool body behind the bottom surface of the insert seat makes it possible to either:
- maximize the number of insert seats distributed in the circumferential direction of the tool body for a tool body of a given diameter and with chip pockets or chip flutes of a given size,
- minimize the diameter of the tool body for a tool body with a given number of insert seats distributed in the circumferential direction of the tool body and with chip pockets or chip flutes of a given size,
- maximize the size of the chip pockets or chip flutes for a tool body of a given diameter and with a given number of insert seats distributed in the circumferential direction of the tool body, or
- adapt the shape of the chip pockets or chip flutes in a better way for a tool body of a given diameter and with a given number of insert seats distributed in the circumferential direction of the tool body.

Said at least one insert seat and the associated cutting insert to be mounted in the insert seat may be so adapted to each other that the cutting insert is mounted to the insert seat with an axial tipping-in angle in an interval from -20° to 30°, i.e. with a negative, neutral or positive axial tipping-in angle, and with a radial tipping-in angle in an interval from -20° to 10°, i.e. with a negative, neutral or positive radial tipping-in angle. The above-mentioned substantially tangentially facing bottom surface of the insert seat may be arranged in a completely tangential position in the tool body, i.e. with a surface normal that extends in a tangential direction of the tool body. However, the substantially tangentially facing bottom surface of the insert seat may as an alternative be slightly inclined, for instance in correspondence with an axial tipping-in angle of the cutting insert in an interval from -20° to 30° and/or radial tipping-in angle of the cutting insert in an interval from -20° to 10°.

According to an embodiment of the invention, said elliptically shaped stress relief surface, as seen in any cross-section of the stress relief groove that is perpendicular to a longitudinal axis of the stress relief groove and intersects the elliptically shaped stress relief surface, forms part of an imaginary ellipse having a major axis that extends at an angle of 90-180°, preferably 100-170°, and more preferably 110-160°, in relation to the bottom surface of the insert seat. When the elliptically shaped stress relief surface has such a shape and orientation that the major axis of said imaginary ellipse extends at an angle of 90-180° in relation to the bottom surface of the insert seat, the part of the elliptically shaped stress relief surface associated with the major radius of the imaginary ellipse will have a position in the stress relief groove that is favourable with respect to the above-mentioned high stress area of the stress relief groove. The stress relieving effect is improved when said angle is in the range of 100-170°. Furthermore, the above-mentioned space-saving effect is particularly distinct when said angle is in the range of 110-160°. The elliptically shaped stress relief surface may have such a shape and orientation that the shape and orientation of said imaginary ellipse vary along the elliptically shaped stress relief surface, as seen in the longitudinal direction of the stress relief groove. Thus, the angle of inclination of the major axis of said imaginary ellipse in relation to the bottom surface of the insert seat in one cross-section of the stress relief groove that is perpendicular to a longitudinal axis of the stress relief groove and intersects the elliptically shaped stress relief surface may be different from the angle of inclination of the major axis of said imaginary ellipse in relation to the bottom surface of the insert seat in other cross-sections of the stress relief groove that is perpendicular to a longitudinal axis of the stress relief groove and intersects the elliptically shaped stress relief surface.

According to another embodiment of the invention, said elliptically shaped stress relief surface, as seen in any cross-section of the stress relief groove that is perpendicular to a longitudinal axis of the stress relief groove and intersects the elliptically shaped stress relief surface, forms part of an imaginary ellipse having a minor radius of at least 0.5 mm and a major radius that is at least 20% larger than the minor radius and no larger than 1000 mm. When the major radius is at least 20% larger than the minor radius, the elliptically shaped stress relief surface will have a distinct elliptical cross-sectional shape that differs substantially from the circular cross-sectional shape of a conventional stress relief surface of a stress relief groove of the type here in question. If the major radius is larger than 1000 mm, the elliptically shaped stress relief surface will take up a great deal of space and it will then be difficult to find room for the elliptically shaped stress relief surface in the tool body.

According to another embodiment of the invention, said major radius is no larger than 300 mm, preferably no larger than 100 mm, and more preferably no larger than 50 mm. The smaller the major radius, the more space-saving the design of the elliptically shaped stress relief surface. Furthermore, the elliptically shaped stress relief surface may be easier to achieve in the insert seat when said major radius is reduced. A major radius of up to 50 mm implies a good compromise between stress relief, space demand and manufacturability.

According to another embodiment of the invention, said stress relief groove comprises a semi-funnel-shaped section at its first end, wherein this semi-funnel-shaped section has a narrower end facing away from the first end of the stress relief groove and an opposite wider end, and wherein at least a part of said elliptically shaped stress relief surface extends from the wider end to the narrower end of this semi-funnel-shaped section. Hereby, the cross-sectional shape of the stress relief groove is at the largest at the first end of the stress relief groove where the highest stress concentration occurs as seen in the longitudinal direction of the stress relief groove, which makes it possible to maximize the radius of curvature of the elliptically shaped stress relief surface in this high stress area of the stress relief groove.

Another embodiment of the invention is characterized in:
- that said elliptically shaped stress relief surface, as seen in a first cross-section of the stress relief groove perpendicular to a longitudinal axis of the stress relief groove at the narrower end of said semi-funnel-shaped section, forms part of a first imaginary ellipse having a major radius and a minor radius; and
- that said elliptically shaped stress relief surface, as seen in a second cross-section of the stress relief groove perpendicular to a longitudinal axis of the stress relief groove at the wider end of said semi-funnel-shaped section, forms part of a second imaginary ellipse having a major radius and a minor radius, wherein the major radius of the second imaginary ellipse is larger than the major radius of the first imaginary ellipse and/or the minor radius of the second imaginary ellipse is larger than the minor radius of the first imaginary ellipse.

Hereby, the elliptically shaped stress relief surface will have its largest radius of curvature at the first end of the stress relief groove where the highest stress concentration occurs as seen in the longitudinal direction of the stress relief groove.

According to another embodiment of the invention, said elliptically shaped stress relief surface, as seen in any cross-section of the stress relief groove that is perpendicular to a longitudinal axis of the stress relief groove and intersects the elliptically shaped stress relief surface, forms part of an imaginary ellipse having a major radius and a minor radius, wherein the major radius of this imaginary ellipse increases continuously when moving along the elliptically shaped stress relief surface in the longitudinal direction of the stress relief groove from the narrower end to the wider end of said semi-funnel-shaped section and/or the minor radius of this imaginary ellipse increases continuously when moving along the elliptically shaped stress relief surface in the longitudinal direction of the stress relief groove from the narrower end to the wider end of said semi-funnel-shaped section. Hereby, the radius of curvature of the elliptically shaped stress relief surface will increase towards the first end of the stress relief groove where the highest stress concentration occurs as seen in the longitudinal direction of the stress relief groove.

Said elliptically shaped stress relief surface preferably extends in a convex curve from the narrower end to the wider end of said semi-funnel-shaped section, as seen in any longitudinal section of the semi-funnel-shaped section that intersects the elliptically shaped stress relief surface at both the narrower end and the wider end of the semi-funnel-shaped section. However, said elliptically shaped stress relief surface may as an alternative extend along an inclined straight line from the narrower end to the wider end of said semi-funnel-shaped section, as seen in any longitudinal section of the semi-funnel-shaped section that intersects the elliptically shaped stress relief surface at both the narrower end and the wider end of the semi-funnel-shaped section.

According to another embodiment of the invention, said stress relief groove comprises an additional stress relief surface that has a non-elliptical shape as seen in any cross-section of the stress relief groove that is perpendicular to a longitudinal axis of the stress relief groove and intersects this additional stress relief surface, wherein:
- said additional stress relief surface, in each cross-section of the stress relief groove that is perpendicular to a longitudinal axis of the stress relief groove and intersects the additional stress relief surface, extends at least from a deepest point in said first groove part to a point in said second groove part;
- said additional stress relief surface extends in the longitudinal direction of the stress relief groove along a part of the length of the stress relief groove; and
- said additional stress relief surface and said elliptically shaped stress relief surface are arranged in consecutive parts of the stress relief groove as seen in the longitudinal direction of the stress relief groove, wherein the elliptically shaped stress relief surface is located between the additional stress relief surface and said first end of the stress relief groove.

It is more complicated and expensive to achieve an elliptically shaped stress relief surface as compared to a non-elliptically shaped stress relief surface, such as for instance a stress relief surface with a circular cross-sectional shape, in a stress relief groove of the type here in question. This is due to the fact that an elliptically shaped stress relief surface has to be machined with a ball nose end mill in a rather time-consuming manner. Thus, by providing the stress relief groove with a non-elliptically shaped stress relief surface in the part or parts of the stress relief groove where the stress concentration is rather low and where a smaller radius of curvature of the stress relief surface will give a sufficient fatigue strength, and providing the stress relief groove with an elliptically shaped stress relief surface only in the part or parts of the stress relief groove where the stress concentration is higher and where a larger radius of curvature of the stress relief surface is required in order to achieve a sufficient fatigue strength, it will be possible to save costs in the manufacturing of the tool body as compared to the case when the stress relief groove has an elliptically shaped stress relief surface that extends all along the length of the stress relief groove.

Said additional stress relief surface, as seen in any cross-section of the stress relief groove that is perpendicular to a longitudinal axis of the stress relief groove and intersects the additional stress relief surface, preferably has a circular shape with a radius of curvature that is smaller than the largest radius of curvature of said elliptically shaped stress relief surface in any cross-section of the stress relief groove that is perpendicular to a longitudinal axis of the stress relief groove and intersects the elliptically shaped stress relief surface. A stress relief surface with a circular cross-sectional shape can be achieved in the insert seat in a very simple and cost-effective manner, which will save costs in the manufacturing of the tool body.

Another embodiment of the invention is characterized in:
- that said stress relief groove at its first end ends in the front face of the tool body;
- that said stress relief groove at a second end ends in the peripheral surface of the tool body;
- that said elliptically shaped stress relief surface constitutes a first elliptically shaped stress relief surface of said stress relief groove; and
- that said stress relief groove comprises a second elliptically shaped stress relief surface that has an elliptical shape as seen in any cross-section of the stress relief groove that is perpendicular to a longitudinal axis of the stress relief groove and intersects this second elliptically shaped stress relief surface, wherein:
   - the second elliptically shaped stress relief surface extends in a longitudinal direction of the stress relief groove from said second end of the stress relief groove along a part of the length of the stress relief groove, and
   - the second elliptically shaped stress relief surface, in each cross-section of the stress relief groove that is perpendicular to a longitudinal axis of the stress relief groove and intersects the second elliptically shaped stress relief surface, extends at least from a deepest point in said first groove part to a point in said second groove part.

Thus, in this case, the stress relief groove extends all along the internal wall of the insert seat between the front face of the tool body and the peripheral surface of the tool body, wherein the stress relief groove is provided with elliptically shaped stress relief surfaces at both of its ends. As an alternative, said at least one insert seat may be provided with a first stress relief groove that extends between a first part of the internal wall and the bottom surface of the insert seat in an essentially straight line from the front face of the tool body and a separate second stress relief groove that extends between another part of the internal wall and the bottom surface of the insert seat in an essentially straight line from the peripheral surface of the tool body, wherein the first stress relief groove is provided with an elliptically shaped stress relief surface at the end ending in the front face of the tool body and/or the second stress relief groove is provided with an elliptically shaped stress relief surface at the end ending in the peripheral surface of the tool body.

According to another embodiment of the invention, said second elliptically shaped stress relief surface, as seen in any cross-section of the stress relief groove that is perpendicular to a longitudinal axis of the stress relief groove and intersects the second elliptically shaped stress relief surface, forms part of an imaginary ellipse having a major axis that extends at an angle of 90-180°, preferably 100-170°, and more preferably 110-160°, in relation to the bottom surface of the insert seat.

According to another embodiment of the invention, said second elliptically shaped stress relief surface, as seen in any cross-section of the stress relief groove that is perpendicular to a longitudinal axis of the stress relief groove and intersects the second elliptically shaped stress relief surface, forms part of an imaginary ellipse having a minor radius of at least 0.5 mm and a major radius that is at least 20% larger than the minor radius and no larger than 1000 mm, preferably on larger than 300 mm, more preferably no larger than 100 mm, and most preferably no larger than 50 mm.

According to another embodiment of the invention, said stress relief groove comprises a semi-funnel-shaped section at its second end, wherein this semi-funnel-shaped section has a narrower end facing away from the second end of the stress relief groove and an opposite wider end, and wherein at least a part of said second elliptically shaped stress relief surface extends from the wider end to the narrower end of this semi-funnel-shaped section. Hereby, the cross-sectional shape of the stress relief groove is increased at the second end of the stress relief groove where high stress concentration occurs, which makes it possible to maximize the radius of curvature of the second elliptically shaped stress relief surface in this high stress area of the stress relief groove.

The tool body preferably comprises two or more insert seats of the type described above distributed in the circumferential direction of the tool body.

Further advantageous features of the tool body according to the present invention will appear from the description following below.

The invention also relates to a rotary cutting tool comprising a tool body of the above-mentioned type and a cutting insert releasably mountable in said at least one insert seat. This rotary cutting tool is preferably a milling tool.

According to an embodiment of the invention, the rotary cutting tool comprises a fastening element in the form of a screw associated with said cutting insert and by means of which said cutting insert may be releasably fixed to said at least one insert seat, wherein this fastening element is configured to extend through a through hole in said cutting insert and to be in threaded engagement with a screw hole in the bottom surface of said at least one the insert seat.

Further advantageous features of the rotary cutting tool according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a perspective view of a rotary cutting tool according to an embodiment of the present invention, as seen with a cutting insert removed from its insert seat in the tool body of the rotary cutting tool,
- Fig 2: is a perspective view from another direction of the rotary cutting tool of Fig 1,
- Fig 3: is a front view of the cutting tool of Fig 1,
- Fig 4: is a cut according to the line IV-IV in Fig 2,
- Fig 5: is a perspective view of a part of the rotary cutting tool of Fig 1 illustrating an insert seat formed in the tool body of the rotary cutting tool,
- Figs 6a and 6b: are front views of the insert seat of Fig 5,
- Fig 7: is a cut according to the line A2-A2 in Fig 6b,
- Fig 8: is a cut according to the line A1-A1 in Fig 6b,
- Fig 9: is a cut according to the line B-B in Fig 6b,
- Fig 10: is a cut according to the line C-C in Fig 6b,
- Fig 11: is a cut according to the line X-X in Fig 6b,
- Figs 12a and 12b: are perspective views from different directions of a cutting insert included in the rotary cutting tool of Fig 1,
- Fig 12c: is a lateral view of the cutting insert of Figs 12a and 12b,
- Fig 12d: is a cut according to the line Xlld-Xlld in Fig 12c,
- Fig 12e: is a plan view from below of the cutting insert of Figs 12a and 12b, and
- Fig 13: is a perspective view of a rotary cutting tool according to another embodiment of the invention, as seen with a cutting insert removed from its insert seat in the tool body of the rotary cutting tool.

### DETAILED DESCRIPTION OF EMBODIMENTS OF THE INVENTION

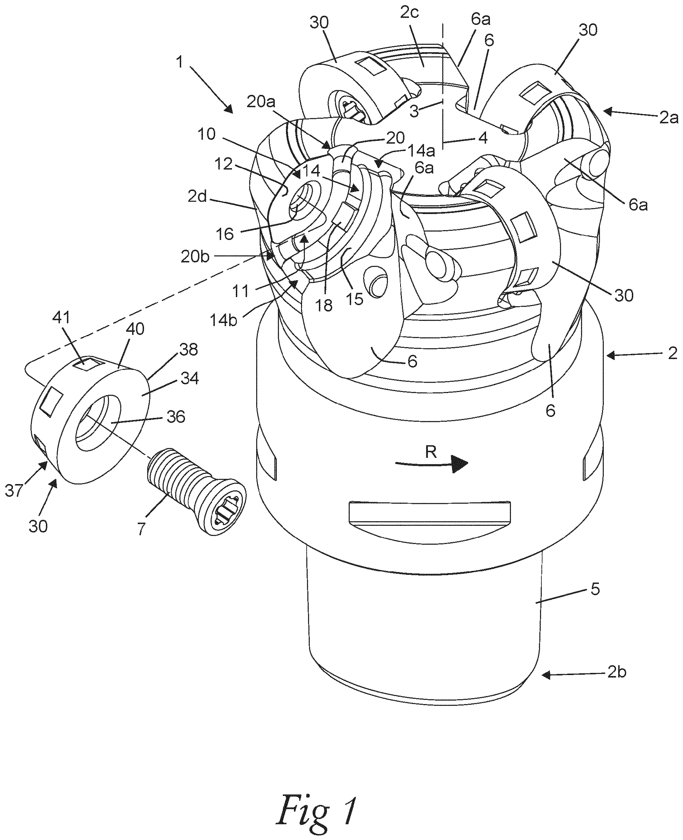

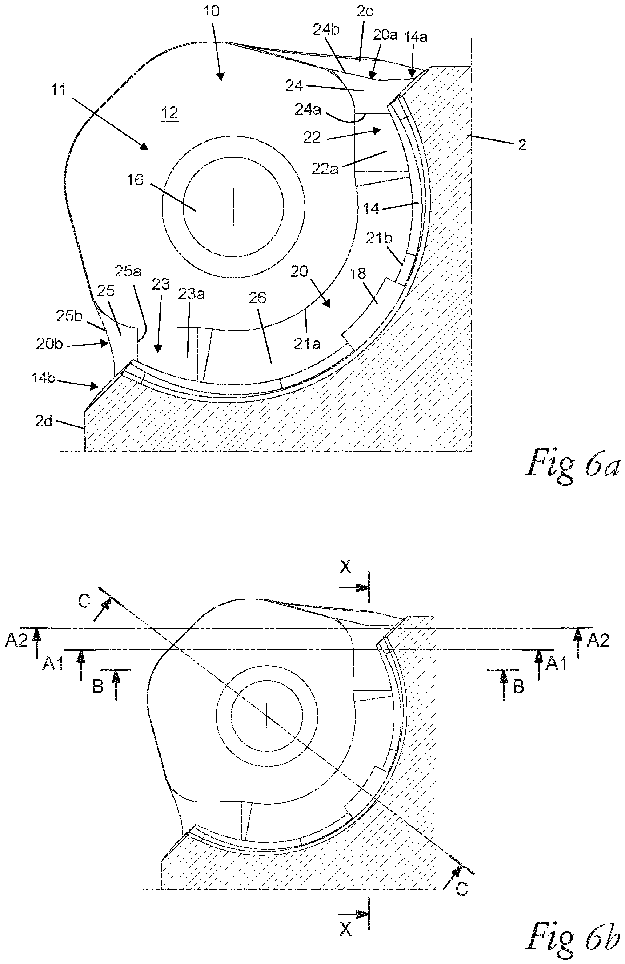

A rotary cutting tool 1 according to an embodiment of the present invention is illustrated in Figs 1-11. The rotary cutting tool 1 illustrated in Figs 1-11 has the design of a milling tool in the form of a face milling cutter. However, the rotary cutting tool of the present invention may as an alternative have the design of any other suitable type of milling tool. The rotary cutting tool of the present invention may also have the design of a drilling tool, for instance in the form of an indexable insert drill of the type illustrated in WO 2023/117168 A1.

The rotary cutting tool 1 comprises a tool body 2 and is configured to be rotated about an axis of rotation 3. The tool body 2 has a front end 2a and an opposite rear end 2b. A longitudinal centre axis 4 of the tool body 2 extends between the rear end 2b and the front end 2a of the tool body, wherein this centre axis 4 coincides with the axis of rotation 3 of the rotary cutting tool 1. A rear part of the tool body 2 forms a connection member 5, through which the tool body 2 is mountable, directly or via an intermediate tool holder, to a rotating spindle or the similar of a machine, for instance a milling machine. At the front end 2a, the tool body 2 is provided with an axially forwardly facing front face 2c. The tool body 2 also has a peripheral surface 2d that adjoins to the front face 2c and extends from the front face 2c towards the rear end 2b of the tool body.

In the illustrated embodiment, the tool body 2 is provided with several insert seats 10 which are evenly or at least substantially evenly distributed in the circumferential direction of the tool body 2 and configured to receive a respective cutting insert 30. Thus, the insert seats 10 and also the cutting inserts 30, are evenly or at least substantially evenly distributed about the centre axis 4 of the tool body 2. Each cutting insert 30 is configured to be detachably mounted in its associated insert seat 10. A chip pocket 6 is provided in the tool body 2 in front of each insert seat 10 as seen in the intended direction of rotation R of the tool body 2.

The cutting inserts 30 are made of hard and wear-resistant material, preferably cemented carbide, and the tool body 2 is preferably made of steel.

In the embodiment illustrated in Figs 1-11, the tool body 2 is provided with four insert seats 10 spaced apart in the circumferential direction of the tool body. However, the tool body 2 may as an alternative, inter alia depending on the diameter of the tool body, be provided with any other suitable number of insert seats 10. Each insert seat 10 is located at a transition between the front face 2c and the peripheral surface 2d of the tool body 2. Each insert seat 10 comprises a space 11 configured to accommodate a detachably mounted cutting insert 30, wherein this space 11 is open towards the front face 2c of the tool body 2 in order to allow a cutting insert 30 mounted in the insert seat 10 to project in the axial direction of the tool body 2 beyond the front end 2a thereof and also open towards the peripheral surface 2d of the tool body 2 in order to allow a cutting insert 30 mounted in the insert seat 10 to project in the radial direction of the tool body 2 beyond the peripheral surface 2d thereof.

Each insert seat 10 comprises a substantially tangentially facing bottom surface 12, a substantially tangentially facing top opening opposite to the bottom surface 12 and an internal wall 14 provided between the bottom surface 12 and the top opening. The top opening is facing the chip pocket 6 provided in front of the insert seat 10. The bottom surface 12 is substantially flat and extends in a first plane PL1 and is configured to abut against a tangential abutment surface 39 on a cutting insert 30 when the cutting insert is mounted in the insert seat 10. The internal wall 14 extends transversely to the bottom surface 12 and delimits the cutting insert accommodating space 11 together with the bottom surface 12. The internal wall 14 has a first end 14a, through which the internal wall 14 adjoins to the front face 2c of the tool body 2, and a second end 14b, through which the internal wall 14 adjoins to the peripheral surface 2d of the tool body 2. In the illustrated embodiment, the insert seat 10 is configured to receive a cutting insert 30 with a round basic shape, wherein the internal wall extends in a curved path from its first end 14a to its second end 14b. In this case, the internal wall 14 is provided with a curved side support surface 15 for supporting the cutting insert 30 when mounted in the insert seat 10, wherein this curved side support surface 15 is configured to abut against a curved abutment surface 40 on a peripheral surface 37 of the cutting insert 30. However, the internal wall 14 of the insert seat 10 may as an alternative have any other suitable shape in dependence on the shape of the cutting insert to be mounted in the insert seat. If the insert seat 10 is configured to receive a cutting insert 30 with a polygonal basic shape, such as for instance a quadrangular basic shape, the internal wall 14 may, instead of a curved side support surface 15, be provided with a substantially flat axial support surface and a substantially flat radial support surface configured to abut against an axial abutment surface and a radial abutment surface, respectively, on a peripheral surface of a cutting insert when the cutting insert is mounted in the insert seat 10, wherein said axial and radial support surfaces are arranged at an angle to each other.

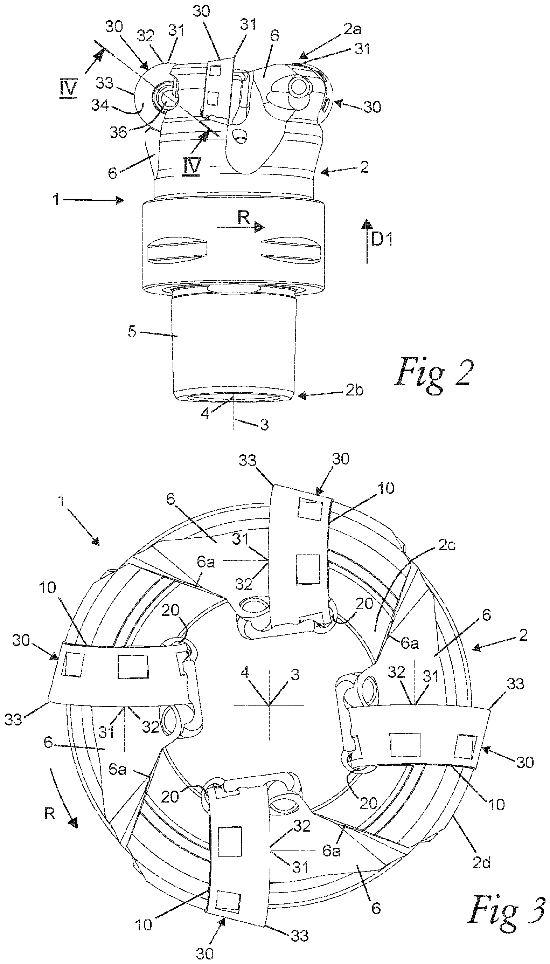

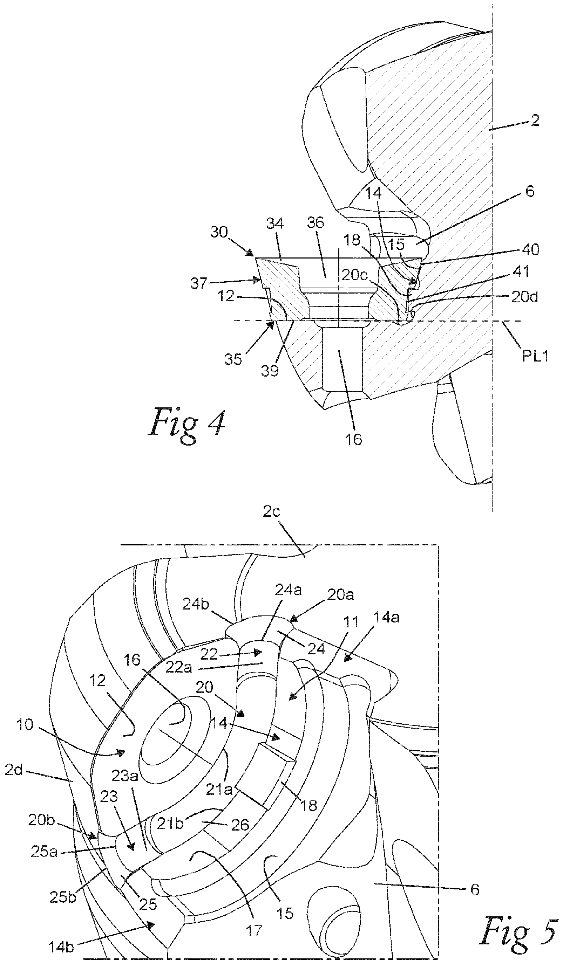

In the illustrated embodiments, each cutting insert 30 is releasably fixed to the associated insert seat 10 by means of a fastening element 7 in the form of a screw, which extends through a through hole 36 in the cutting insert 30 and is engaged in a threaded hole 16 in the bottom surface 12 of the insert seat 10. The fastening elements 7 have been omitted in Figs 2 and 4.

Each insert seat 10 comprises at least one stress relief groove 20 that forms a transition between at least a part of the bottom surface 12 and the internal wall 14 of the insert seat 10 and that at a first end 20a ends in the front face 2c or the peripheral surface 2d of the tool body 2. In the illustrated embodiment, the stress relief groove 20 extends in a curved path all along the internal wall 14 of the insert seat 10, wherein the stress relief groove 20 at a first end 20a ends in the front face 2c of the tool body 2 and at a second end 20b ends in the peripheral surface 2d of the tool body. The stress relief groove 20 has a first longitudinal edge 21a, through which the stress relief groove 20 adjoins to the bottom surface 12 of the insert seat 10, and an opposite second longitudinal edge 21b, through which the stress relief groove 20 adjoins to the internal wall 14 of the insert seat 10. The stress relief groove 20 has a first groove part 20c that adjoins to said first longitudinal edge 21a, is depressed in relation to the bottom surface 12 of the insert seat 10 and located on a first side of the above-mentioned first plane PL1, and an adjacent second groove part 20d that adjoins to said second longitudinal edge 21b and is located on an opposite second side of said first plane PL1. The second groove part 20d forms an undercut recess between the internal wall 14 of the insert seat 10 and the first plane PL1.

The stress relief groove 20 comprises a first elliptically shaped stress relief surface 22 that has an elliptical shape as seen in any cross-section of the stress relief groove 20 that is perpendicular to a longitudinal axis of the stress relief groove and intersects this first elliptically shaped stress relief surface 22, wherein this first elliptically shaped stress relief surface 22 extends in a longitudinal direction of the stress relief groove 20 from the first end 20a of the stress relief groove along a part of the length of the stress relief groove 20. In the illustrated embodiment, the stress relief groove 20 also comprises a second elliptically shaped stress relief surface 23 that has an elliptical shape as seen in any cross-section of the stress relief groove 20 that is perpendicular to a longitudinal axis of the stress relief groove and intersects this second elliptically shaped stress relief surface 23, wherein this second elliptically shaped stress relief surface 23 extends in a longitudinal direction of the stress relief groove 20 from the second end 20b of the stress relief groove along a part of the length of the stress relief groove 20.

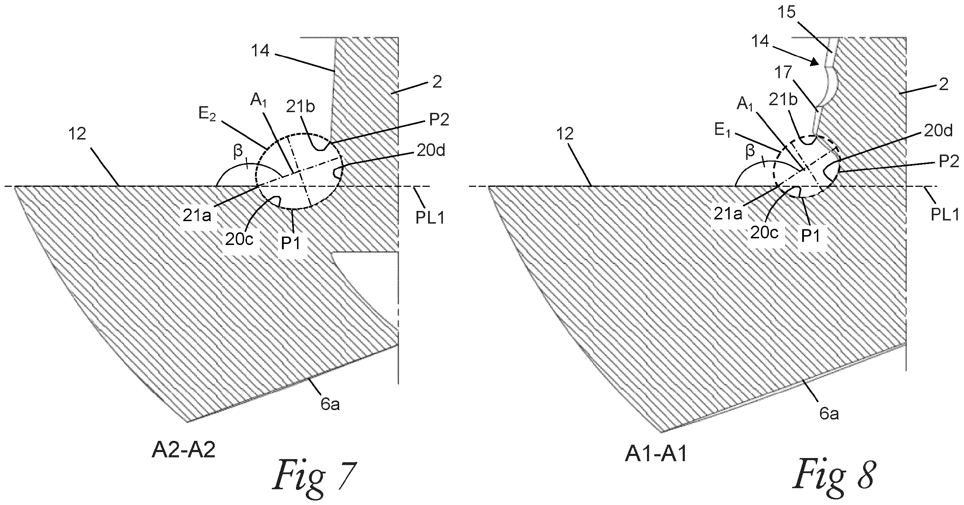

In each cross-section of the stress relief groove 20 that is perpendicular to a longitudinal axis of the stress relief groove 20 and intersects the first elliptically shaped stress relief surface 22, the first elliptically shaped stress relief surface 22 extends at least from a deepest point P1 in said first groove part 20c to a point P2 in said second groove part 20d. In the corresponding manner, in each cross-section of the stress relief groove 20 that is perpendicular to a longitudinal axis of the stress relief groove 20 and intersects the second elliptically shaped stress relief surface 23, the second elliptically shaped stress relief surface 23 extends at least from a deepest point P1 in said first groove part 20c to a point P2 in said second groove part 20d. The deepest point P1 in the first groove part 20c, as seen in a cross-section perpendicular to a longitudinal axis of the stress relief groove 20, constitutes the point in the first groove part 20c that is located at the longest perpendicular distance from said first plane PL1 in the cross-section in question. The first elliptically shaped stress relief surface 22 may, as illustrated in Figs 7-9, extend all along the first part 20c of the stress relief groove 20, as seen in a cross-section of the stress relief groove 20 that is perpendicular to a longitudinal axis of the stress relief groove 20 and intersects the first elliptically shaped stress relief surface 22. In the corresponding manner, the second elliptically shaped stress relief surface 23 may extend all along the first part 20c of the stress relief groove 20, as seen in a cross-section of the stress relief groove 20 that is perpendicular to a longitudinal axis of the stress relief groove 20 and intersects the second elliptically shaped stress relief surface 23.

Said second point P2 may be located at a distance from the above-mentioned second longitudinal edge 21b of the stress relief groove 20. However, the second point P2 may as an alternative be a point on the second longitudinal edge 21b. If any one of the first and second elliptically shaped stress relief surfaces 22, 23 extends to a point P2 located on the second longitudinal edge 21b of the stress relief groove 20 in any cross-section of the stress relief groove 20, the elliptically shaped stress relief surface 22, 23 in question extends all along the second part 20d of the stress relief groove in the cross-section in question. In the cross-section illustrated in Fig 7, the first elliptically shaped stress relief surface 22 extends to a point P2 located on the second longitudinal edge 21b of the stress relief groove 20, which consequently implies that the first elliptically shaped stress relief surface 22 extends all along the second part 20d of the stress relief groove in this cross-section. Any one of the first and second elliptically shaped stress relief surfaces 22, 23 may be configured to extend all along the first and second parts 20c, 20d of the stress relief groove 20, i.e. from the first longitudinal edge 21a of the stress relief groove to the second longitudinal edge 21b thereof, as seen in each cross-section of the stress relief groove 20 that is perpendicular to a longitudinal axis of the stress relief groove 20 and intersects the elliptically shaped stress relief surface 22, 23 in question.

As seen in any cross-section of the stress relief groove 20 that is perpendicular to a longitudinal axis of the stress relief groove 20 and intersects the first elliptically shaped stress relief surface 22, the first elliptically shaped stress relief surface 22 forms part of an imaginary ellipse E₁, E₂, E₃ having a major axis A₁ that extends at an angle β of 90-180°, preferably 100-170°, and more preferably 110-160°, in relation to the bottom surface 12 of the insert seat 10, wherein this imaginary ellipse E₁, E₂, E₃ preferably has a minor radius of at least 0.5 mm and a major radius that is at least 20% larger than the minor radius and no larger than 1000 mm, preferably no larger than 300 mm, more preferably no larger than 100 mm, and most preferably no larger than 50 mm. In the corresponding manner, as seen in any cross-section of the stress relief groove 20 that is perpendicular to a longitudinal axis of the stress relief groove 20 and intersects the second elliptically shaped stress relief surface 23, the second elliptically shaped stress relief surface 23 forms part of an imaginary ellipse having a major axis A₁ that extends at an angle β of 90-180°, preferably 100-170°, and more preferably 110-160°, in relation to the bottom surface 12 of the insert seat 10, wherein this imaginary ellipse preferably has a minor radius of at least 0.5 mm and a major radius that is at least 20% larger than the minor radius and no larger than 1000 mm, preferably no larger than 300 mm, more preferably no larger than 100 mm, and most preferably no larger than 50 mm.

The above-mentioned major axis A₁ preferably has an inclination that essentially corresponds to the inclination of the part 6a of the internal wall of the chip pocket 6 that is located behind the bottom surface 12 of the insert seat 10 as seen in the intended direction of rotation R of the tool body 2, as illustrated in Fig 7, such that the major axis A₁ extends essentially in parallel with said wall part 6a or at an angle of ±20° in relation to said wall part 6a.

In the illustrated embodiment, said stress relief groove 20 comprises a first semi-funnel-shaped section 24 at its first end 20a, wherein this first semi-funnel-shaped section 24 has a narrower end 24a facing away from the first end 20a of the stress relief groove 20 and an opposite wider end 24b, and wherein a part of the first elliptically shaped stress relief surface 22 extends from the wider end 24b to the narrower end 24a of this first semi-funnel-shaped section 24. As seen in a first cross-section of the stress relief groove 20 perpendicular to a longitudinal axis of the stress relief groove 20 at the narrower end 24a of the first semi-funnel-shaped section 24, the first elliptically shaped stress relief surface 22 forms part of a first imaginary ellipse E₁ (see Fig 8) having a major radius and a minor radius. As seen in a second cross-section of the stress relief groove 20 perpendicular to a longitudinal axis of the stress relief groove 20 at the wider end 24b of the first semi-funnel-shaped section 24, the first elliptically shaped stress relief surface 22 forms part of a second imaginary ellipse E₂ (see Fig 7) having a major radius and a minor radius, wherein the major radius of the second imaginary ellipse E₂ is larger than the major radius of the first imaginary ellipse E₁ and/or the minor radius of the second imaginary ellipse E₂ is larger than the minor radius of the first imaginary ellipse E₁.

In the illustrated embodiment, said stress relief groove 20 also comprises a second semi-funnel-shaped section 25 at its second end 20b, wherein this second semi-funnel-shaped section 25 has a narrower end 25a facing away from the second end 20b of the stress relief groove 20 and an opposite wider end 25b, and wherein a part of the second elliptically shaped stress relief surface 23 extends from the wider end 25b to the narrower end 25a of this second semi-funnel-shaped section 25. As seen in a third cross-section of the stress relief groove 20 perpendicular to a longitudinal axis of the stress relief groove 20 at the narrower end 25a of the second semi-funnel-shaped section 25, the second elliptically shaped stress relief surface 23 forms part of a third imaginary ellipse (not shown) having a major radius and a minor radius. As seen in a fourth cross-section of the stress relief groove 20 perpendicular to a longitudinal axis of the stress relief groove 20 at the wider end 25b of the second semi-funnel-shaped section 25, the second elliptically shaped stress relief surface 23 forms part of a fourth imaginary ellipse (not shown) having a major radius and a minor radius, wherein the major radius of the fourth imaginary ellipse is larger than the major radius of the third imaginary ellipse and/or the minor radius of the fourth imaginary ellipse is larger than the minor radius of the third imaginary ellipse.

Furthermore, as seen in any cross-section of the stress relief groove 20 that is perpendicular to a longitudinal axis of the stress relief groove 20 and intersects the first elliptically shaped stress relief surface 22, the first elliptically shaped stress relief surface 22 forms part of an imaginary ellipse having a major radius and a minor radius, wherein the major radius of this imaginary ellipse increases continuously when moving along the first elliptically shaped stress relief surface 22 in the longitudinal direction of the stress relief groove 20 from the narrower end 24a to the wider end 24b of the first semi-funnel-shaped section 24 and/or the minor radius of this imaginary ellipse increases continuously when moving along the first elliptically shaped stress relief surface 22 in the longitudinal direction of the stress relief groove 20 from the narrower end 24a to the wider end 24b of the first semi-funnel-shaped section 24. In the corresponding manner, as seen in any cross-section of the stress relief groove 20 that is perpendicular to a longitudinal axis of the stress relief groove 20 and intersects the second elliptically shaped stress relief surface 23, the second elliptically shaped stress relief surface 23 forms part of an imaginary ellipse having a major radius and a minor radius, wherein the major radius of this imaginary ellipse increases continuously when moving along the second elliptically shaped stress relief surface 23 in the longitudinal direction of the stress relief groove 20 from the narrower end 25a to the wider end 25b of the second semi-funnel-shaped section 25 and/or the minor radius of this imaginary ellipse increases continuously when moving along the second elliptically shaped stress relief surface 23 in the longitudinal direction of the stress relief groove 20 from the narrower end 25a to the wider end 25b of the second semi-funnel-shaped section 25.

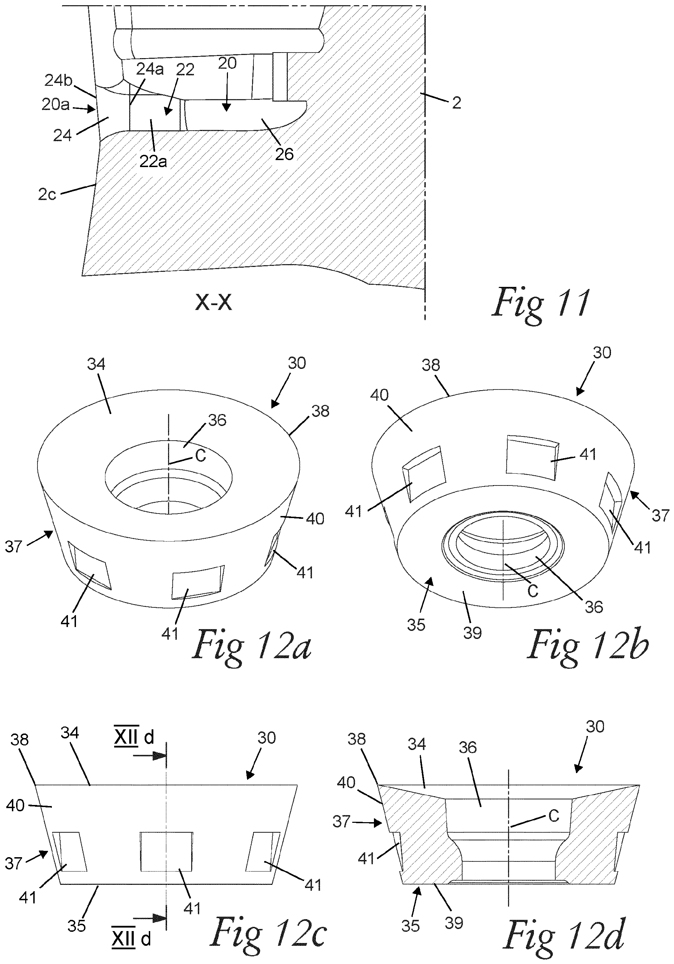

In the illustrated embodiment and as illustrated in Fig 11, the first elliptically shaped stress relief surface 22 extends in a convex curve from the narrower end 24a to the wider end 24b of the first semi-funnel-shaped section 24, as seen in any longitudinal section of the first semi-funnel-shaped section 24 that intersects the first elliptically shaped stress relief surface 22 at both the narrower end 24a and the wider end 24b of the first semi-funnel-shaped section 24. In the corresponding manner, the second elliptically shaped stress relief surface 23 extends in a convex curve from the narrower end 25a to the wider end 25b of the second semi-funnel-shaped section 25, as seen in any longitudinal section of the second semi-funnel-shaped section 25 that intersects the second elliptically shaped stress relief surface 23 at both the narrower end 25a and the wider end 25b of the second semi-funnel-shaped section 25.

Said stress relief groove 20 preferably also comprises an additional stress relief surface 26 that has a non-elliptical shape as seen in any cross-section of the stress relief groove 20 that is perpendicular to a longitudinal axis of the stress relief groove 20 and intersects this additional stress relief surface 26, wherein this additional stress relief surface extends in the longitudinal direction of the stress relief groove 20 along a part of the length of the stress relief groove 20. In each cross-section of the stress relief groove 20 that is perpendicular to a longitudinal axis of the stress relief groove 20 and intersects the additional stress relief surface 26, the additional stress relief surface 26 extends at least from a deepest point P1 in the above-mentioned first groove part 20c to a point P2 in the above-mentioned second groove part 20d. The additional stress relief surface 26 and the first and second elliptically shaped stress relief surfaces 22, 23 are arranged in consecutive parts of the stress relief groove 20 as seen in the longitudinal direction of the stress relief groove 20, wherein the additional stress relief surface 26 is located between the first and second elliptically shaped stress relief surfaces 22, 23. At a first end, the additional stress relief surface 26 is connected to the first elliptically shaped stress relief surface 22, preferably through a continuous and smooth transition without any sharp edge. At its other end, the additional stress relief surface 26 is connected to the second elliptically shaped stress relief surface 23, preferably through a continuous and smooth transition without any sharp edge.

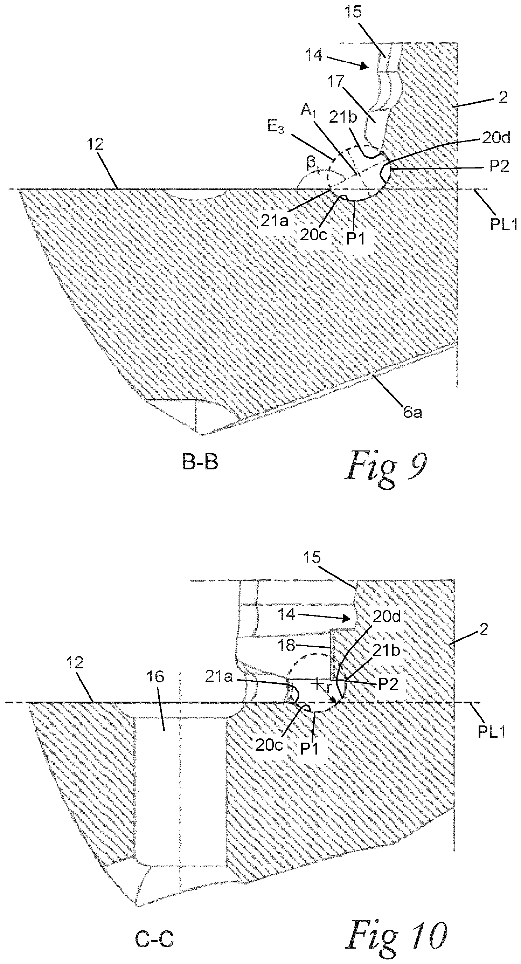

In the illustrated embodiment, the first elliptically shaped stress relief surface 22 comprises a part 22a that is located between the narrower end 24a of the first semi-funnel-shaped section 24 of the stress relief groove 20 and the additional stress relief surface 26, wherein the cross-sectional shape of this part 22a of the first elliptically shaped stress relief surface 22 is illustrated in Fig 9 and is substantially uniform throughout the length of this part. In the corresponding manner, the second elliptically shaped stress relief surface 23 comprises a part 23a that is located between the narrower end 25a of the second semi-funnel-shaped section 25 of the stress relief groove 20 and the additional stress relief surface 26, wherein the cross-sectional shape of this part 23a of the second elliptically shaped stress relief surface 23 is substantially uniform throughout the length of this part.

As seen in any cross-section of the stress relief groove 20 that is perpendicular to a longitudinal axis of the stress relief groove 20 and intersects the additional stress relief surface 26, the additional stress relief surface 26 preferably has a circular shape, as illustrated in Fig 10, with a radius of curvature r that is smaller than the largest radius of curvature of said first and second elliptically shaped stress relief surfaces 22, 23 in any cross-section of the stress relief groove 20 that is perpendicular to a longitudinal axis of the stress relief groove 20 and intersects any of the first and second elliptically shaped stress relief surfaces 22, 23.

Each one of the first and second elliptically shaped stress relief surfaces 22, 23 are preferably machined with a ball nose end mill by moving the ball nose end mill with the front end thereof pointing transversally to the longitudinal direction of the stress relief groove 20, either perpendicularly to or at an inclination to a longitudinal axis of the stress relief groove 20. However, any one of the first and second elliptically shaped stress relief surfaces 22, 23 may as an alternative be machined with a ball nose end mill by moving the ball nose end mill with the front end thereof pointing axially in the longitudinal direction of the stress relief groove 20.

In addition to the first and second elliptically shaped stress relief surfaces 22, 23 described above, the stress relief groove 20 may also comprise one or more elliptically shaped stress relief surfaces with a shape and an orientation that differ from the shape the and orientation that have been described above with reference to the first and second elliptically shaped stress relief surfaces 22, 23. Such an additional elliptically shaped stress relief surface could be connected to the first or second elliptically shaped stress relief surface 22, 23 through a continuous and smooth transition without any sharp edge.

The insert seats 10 are arranged in level with each other as seen in the axial direction of the tool body 2, such that an axially foremost point 31 (see Figs 2 and 3) of each individual cutting insert 30, as seen in a reference direction D1 from the rear end 2b of the tool body 2 towards the front end 2a of the tool body in parallel with the centre axis 4 of the tool body, is located in level with the axially foremost point 31 of each one of the other cutting inserts 30, within manufacturing tolerances, when the cutting inserts 30 are mounted in the insert seats 10. The axially foremost point 31 of each cutting insert 30 forms part of a secondary cutting edge 32 of the cutting insert and each cutting insert also has a primary cutting edge 33 located at the side of the secondary cutting edge 32 and radially outward thereof as seen in relation to the centre axis 4 of the tool body 2.

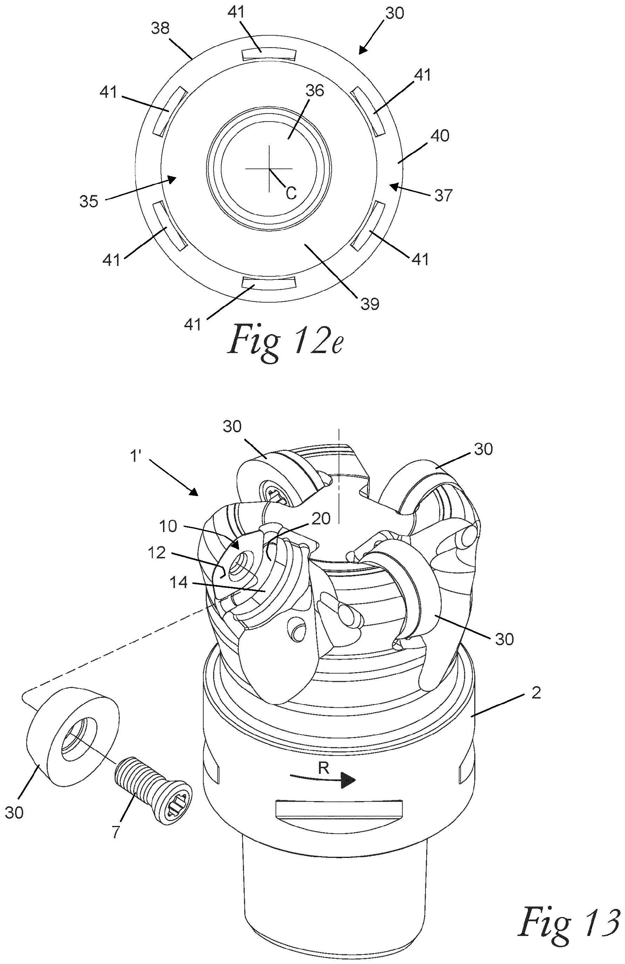

The cutting inserts 30 are all geometrically identical to each other, within manufacturing tolerances. Thus, the cutting inserts 30 have the same shape. The cutting inserts 30 illustrated in Figs 1-4 are of the type illustrated in closer detail in Figs 12a-12e but may also be designed in any other suitable manner.

The cutting insert 30 illustrated in Figs 12a-12e has a round basic shape and is rotatable into different working positions. Thus, the cutting insert 30 may be mounted in different rotary positions, i.e. different indexing position, in the associated insert seat 10. The cutting insert 30 comprises a rake face 34 and an abutment face 35 arranged on opposite sides of the cutting insert and serving as top and bottom faces of the cutting insert. When mounted in the associated insert seat 10, the cutting insert 30 is configured to abut against the bottom surface 12 in the insert seat via a tangential abutment surface 39 on the abutment face 35. The cutting insert 30 has a centre axis C, which extends between the rake face 34 and the abutment face 35. The cutting insert 30 is provided with a through hole 36, which extends centrally through the cutting insert between the rake face 34 and the abutment face 35. The centre axis C of the cutting insert coincides with the centre axis of the through hole 36. A peripheral surface 37, which constitutes the relief surface of the cutting insert, extends around the cutting insert between the rake face 34 and the abutment face 35. When mounted in the associated insert seat 10, the cutting insert 30 is configured to abut against the side support surface 15 in the insert seat via a curved abutment surface 40 on the peripheral surface 37. A substantially circular cutting edge 38 extends along the periphery of the rake face 34 and is formed at an intersection between the peripheral surface 37 and the rake face 34. The above-mentioned primary cutting edge 33 and secondary cutting edge 32 form part of this substantially circular cutting edge 38.

When mounted in any of the insert seats 10, the cutting insert 30 illustrated in Figs 12a-12e is so arranged that the tangential abutment surface 39 abuts against the bottom surface 12 in the insert seat in question and one or more parts of the curved abutment surface 40 abut against the side support surface 15 in the insert seat in question.

In the embodiment illustrated in Figs 1-11, the side support surface 15 on the internal wall 14 of each insert seat 10 is arranged at a distance from the above-mentioned second longitudinal edge 21b of the stress relief groove 20, wherein the internal wall 14 comprises an intermediate surface 17 located between the second longitudinal edge 21b of the stress relief groove 20 and the side support surface 15. The cutting insert 30 and the internal wall 14 of the associated insert seat 10 are so adapted to each other that there is a small gap between the intermediate surface 17 on the internal wall 14 and the peripheral surface 37 of the cutting insert 30 when the cutting insert is mounted in the insert seat. As an alternative, the side support surface 15 may be configured to adjoin directly to the second part 20d of the stress relief groove 20 without any intermediate surface between the side support surface 15 and the second longitudinal edge 21b of the stress relief groove 20.

In the embodiment illustrated in Figs 1-11, each insert seat 10 is provided with an anti-rotation stop 18, which is provided as a projection on the internal wall 14 of the insert seat between a part of the side support surface 15 and the stress relief groove 20 and which projects from the internal wall 14 into the above-mentioned cutting insert accommodating space 11. In this case, several recesses 41 with a shape adapted to the shape of said anti-rotation stop 18 are formed in the peripheral surface 37 of the cutting insert 30 and distributed about the centre axis C of the cutting insert 30. Said recesses 41 are configured to receive the anti-rotation stop 18 the associated insert seat 10 with a small play in a respective one of the different working positions of the cutting insert 30 when the cutting insert is mounted in the insert seat 10. By its engagement in one of the recesses 41 in the peripheral surface 37 of the cutting insert 30, the anti-rotation stop 18 will prevent the cutting insert 30 from rotating in the insert seat 10 out of its prevailing working position. The insert seats 10 and the cutting inserts 30 may also be designed without such anti-rotation stops 18 and recesses 41, as illustrated in Fig 13. Except for the lack of anti-rotation stops 18 and recesses 41 in the insert seats 10 and in the cutting inserts 30, respectively, the rotary cutting tool 1' illustrated in Fig 13 has the same design as the rotary cutting tool 1 illustrated in Figs 1-11.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A tool body (2) of a rotary cutting tool, the tool body (2) having a front end (2a) and an opposite rear end (2b), the rear end (2b) being configured for attachment to a machine, wherein a longitudinal centre axis (4) of the tool body (2) extends between the rear end (2b) and the front end (2a) of the tool body and wherein the tool body (2) has an axially forwardly facing front face (2c) at its front end (2a) and a peripheral surface (2d) that adjoins to the front face (2c) and extends from the front face (2c) towards the rear end (2b) of the tool body, the tool body (2) comprising at least one insert seat (10) provided in the tool body (2) at a transition between the front face (2c) and the peripheral surface (2d) of the tool body (2), wherein said at least one insert seat (10):
- comprises a space (11) configured to accommodate a detachably mounted cutting insert (30), wherein this space (11) is open towards the front face (2c) of the tool body (2) in order to allow a cutting insert (30) mounted in the insert seat (10) to project in the axial direction of the tool body (2) beyond the front end (2a) thereof and also open towards the peripheral surface (2d) of the tool body (2) in order to allow a cutting insert (30) mounted in the insert seat (10) to project in the radial direction of the tool body (2) beyond the peripheral surface (2d) thereof;
- comprises a substantially tangentially facing bottom surface (12) configured to abut against a tangential abutment surface (39) on a cutting insert (30) when the cutting insert is mounted in the insert seat (10), and an internal wall (14) that extends transversely to the bottom surface (12) and delimits said space (11) together with the bottom surface (12) and that at a first end (14a) adjoins to the front face (2c) of the tool body (2) and at a second end (14b) adjoins to the peripheral surface (2d) of the tool body (2), wherein said bottom surface (12) is substantially flat and extends in a first plane (PL1);
- comprises at least one stress relief groove (20) that forms a transition between at least a part of the bottom surface (12) and the internal wall (14) of the insert seat (10) and that at a first end (20a) ends in the front face (2c) or the peripheral surface (2d) of the tool body (2), wherein this stress relief groove (20) has a first longitudinal edge (21a) through which the stress relief groove (20) adjoins to the bottom surface (12) of the insert seat (10) and an opposite second longitudinal edge (21b) through which the stress relief groove (20) adjoins to the internal wall (14) of the insert seat (10), and wherein this stress relief groove (20) has a first groove part (20c) that adjoins to said first longitudinal edge (21a), is depressed in relation to the bottom surface (12) of the insert seat (10) and located on a first side of said first plane (PL1), and an adjacent second groove part (20d) that adjoins to said second longitudinal edge (21b) and is located on an opposite second side of said first plane (PL1),
**characterized in that** said stress relief groove (20) comprises a stress relief surface (22) that has an elliptical shape as seen in any cross-section of the stress relief groove (20) that is perpendicular to a longitudinal axis of the stress relief groove (20) and intersects this stress relief surface (22), wherein:
- said elliptically shaped stress relief surface (22) extends in a longitudinal direction of the stress relief groove (20) from said first end (20a) of the stress relief groove along at least a part of the length of the stress relief groove (20); and
- said elliptically shaped stress relief surface (22), in each cross-section of the stress relief groove (20) that is perpendicular to a longitudinal axis of the stress relief groove (20) and intersects the elliptically shaped stress relief surface (22), extends at least from a deepest point (P1) in said first groove part (20c) to a point (P2) in said second groove part (20d).

2. A tool body according to claim 1, **characterized in that** said elliptically shaped stress relief surface (22), as seen in any cross-section of the stress relief groove (20) that is perpendicular to a longitudinal axis of the stress relief groove (20) and intersects the elliptically shaped stress relief surface (22), forms part of an imaginary ellipse (E₁, E₂, E₃) having a major axis (A₁) that extends at an angle (β) of 90-180°, preferably 100-170°, and more preferably 110-160°, in relation to the bottom surface (12) of the insert seat (10).

3. A tool body according to claim 1 or 2, **characterized in that** said elliptically shaped stress relief surface (22), as seen in any cross-section of the stress relief groove (20) that is perpendicular to a longitudinal axis of the stress relief groove (20) and intersects the elliptically shaped stress relief surface (22), forms part of an imaginary ellipse (E₁, E₂, E₃) having a minor radius of at least 0.5 mm and a major radius that is at least 20% larger than the minor radius and no larger than 1000 mm

4. A tool body according to claim 3, **characterized in that** said major radius is no larger than 300 mm, preferably no larger than 100 mm, and more preferably no larger than 50 mm.

5. A tool body according to any of claims 1-4, **characterized in that** said stress relief groove (20) comprises a semi-funnel-shaped section (24) at its first end (20a), wherein this semi-funnel-shaped section (24) has a narrower end (24a) facing away from the first end (20a) of the stress relief groove (20) and an opposite wider end (24b), and wherein at least a part of said elliptically shaped stress relief surface (22) extends from the wider end (24b) to the narrower end (24a) of this semi-funnel-shaped section (24).

6. A tool body according to claim 5, **characterized in:**
- **that** said elliptically shaped stress relief surface (22), as seen in a first cross-section of the stress relief groove (20) perpendicular to a longitudinal axis of the stress relief groove (20) at the narrower end (24a) of said semi-funnel-shaped section (24), forms part of a first imaginary ellipse (E₁) having a major radius and a minor radius; and
- **that** said elliptically shaped stress relief surface (22), as seen in a second cross-section of the stress relief groove (20) perpendicular to a longitudinal axis of the stress relief groove (20) at the wider end (24b) of said semi-funnel-shaped section (24), forms part of a second imaginary ellipse (E₂) having a major radius and a minor radius, wherein the major radius of the second imaginary ellipse (E₂) is larger than the major radius of the first imaginary ellipse (E₁) and/or the minor radius of the second imaginary ellipse (E₂) is larger than the minor radius of the first imaginary ellipse (E₁).

7. A tool body according to claim 5 or 6, **characterized in that** said elliptically shaped stress relief surface (22), as seen in any cross-section of the stress relief groove (20) that is perpendicular to a longitudinal axis of the stress relief groove (20) and intersects the elliptically shaped stress relief surface (22), forms part of an imaginary ellipse having a major radius and a minor radius, wherein the major radius of this imaginary ellipse increases continuously when moving along the elliptically shaped stress relief surface (22) in the longitudinal direction of the stress relief groove (20) from the narrower end (24a) to the wider end (24b) of said semi-funnel-shaped section (24) and/or the minor radius of this imaginary ellipse increases continuously when moving along the elliptically shaped stress relief surface (22) in the longitudinal direction of the stress relief groove (20) from the narrower end (24a) to the wider end (24b) of said semi-funnel-shaped section (24).

8. A tool body according to claim 7, **characterized in that** said elliptically shaped stress relief surface (22) extends in a convex curve from the narrower end (24a) to the wider end (24b) of said semi-funnel-shaped section (24), as seen in any longitudinal section of the semi-funnel-shaped section (24) that intersects the elliptically shaped stress relief surface (22) at both the narrower end (24a) and the wider end (24b) of the semi-funnel-shaped section (24).

9. A tool body according to any of claims 1-8, **characterized in that** said stress relief groove (20) comprises an additional stress relief surface (26) that has a non-elliptical shape as seen in any cross-section of the stress relief groove (20) that is perpendicular to a longitudinal axis of the stress relief groove (20) and intersects this additional stress relief surface (26), wherein:
- said additional stress relief surface (26), in each cross-section of the stress relief groove (20) that is perpendicular to a longitudinal axis of the stress relief groove (20) and intersects the additional stress relief surface (26), extends at least from a deepest point (P1) in said first groove part (20c) to a point (P2) in said second groove part (20d);
- said additional stress relief surface (26) extends in the longitudinal direction of the stress relief groove (20) along a part of the length of the stress relief groove (20); and
- said additional stress relief surface (26) and said elliptically shaped stress relief surface (22) are arranged in consecutive parts of the stress relief groove (20) as seen in the longitudinal direction of the stress relief groove (20), wherein the elliptically shaped stress relief surface (22) is located between the additional stress relief surface (26) and said first end (20a) of the stress relief groove (20).

10. A tool body according to claim 9, **characterized in that** said additional stress relief surface (26), as seen in any cross-section of the stress relief groove (20) that is perpendicular to a longitudinal axis of the stress relief groove (20) and intersects the additional stress relief surface (26), has a circular shape with a radius of curvature (r) that is smaller than the largest radius of curvature of said elliptically shaped stress relief surface (22) in any cross-section of the stress relief groove (20) that is perpendicular to a longitudinal axis of the stress relief groove (20) and intersects the elliptically shaped stress relief surface (22).

11. A tool body according to any of claims 1-10, **characterized in that** said stress relief groove (20) at its first end (20a) ends in the front face (2c) of the tool body (2).

12. A tool body according to claim 11, **characterized in:**
- **that** said stress relief groove (20) at a second end (20b) ends in the peripheral surface (2d) of the tool body (2);
- **that** said elliptically shaped stress relief surface (22) constitutes a first elliptically shaped stress relief surface of said stress relief groove (20); and
- **that** said stress relief groove (20) comprises a second elliptically shaped stress relief surface (23) that has an elliptical shape as seen in any cross-section of the stress relief groove (20) that is perpendicular to a longitudinal axis of the stress relief groove (20) and intersects this second elliptically shaped stress relief surface (23), wherein:
• the second elliptically shaped stress relief surface (23) extends in a longitudinal direction of the stress relief groove (20) from said second end (20b) of the stress relief groove along a part of the length of the stress relief groove (20), and
• the second elliptically shaped stress relief surface (23), in each cross-section of the stress relief groove (20) that is perpendicular to a longitudinal axis of the stress relief groove (20) and intersects the second elliptically shaped stress relief surface (23), extends at least from a deepest point (P1) in said first groove part (20c) to a point (P2) in said second groove part (20d).

13. A tool body according to claim 12, **characterized in that** said second elliptically shaped stress relief surface (23), as seen in any cross-section of the stress relief groove (20) that is perpendicular to a longitudinal axis of the stress relief groove (20) and intersects the second elliptically shaped stress relief surface (23), forms part of an imaginary ellipse having a major axis (A₁) that extends at an angle (β) of 90-180°, preferably 100-170°, and more preferably 110-160°, in relation to the bottom surface (12) of the insert seat (10).

14. A tool body according to claim 12 or 13, **characterized in that** said second elliptically shaped stress relief surface (23), as seen in any cross-section of the stress relief groove (20) that is perpendicular to a longitudinal axis of the stress relief groove (20) and intersects the second elliptically shaped stress relief surface (23), forms part of an imaginary ellipse having a minor radius of at least 0.5 mm and a major radius that is at least 20% larger than the minor radius and no larger than 1000 mm, preferably no larger than 300 mm, more preferably no larger than 100 mm, and most preferably no larger than 50 mm.

15. A tool body according to any of claims 12-14, **characterized in that** said stress relief groove (20) comprises a semi-funnel-shaped section (25) at its second end (20b), wherein this semi-funnel-shaped section (25) has a narrower end (25a) facing away from the second end (20b) of the stress relief groove (20) and an opposite wider end (25b), and wherein at least a part of said second elliptically shaped stress relief surface (23) extends from the wider end (25b) to the narrower end (25a) of this semi-funnel-shaped section (25).

16. A tool body according to any of claims 1-15, **characterized in that** the tool body (2) comprises two or more such insert seats (10) distributed in the circumferential direction of the tool body.

17. A rotary cutting tool comprising a tool body (2) according to any of claims 1-16 and a cutting insert (30) releasably mountable in said at least one insert seat (10).

18. A rotary cutting tool according to claim 17, wherein the rotary cutting tool (1; 1') comprises a fastening element (7) in the form of a screw associated with said cutting insert (30) and by means of which said cutting insert (30) may be releasably fixed to said at least one insert seat (10), wherein this fastening element (7) is configured to extend through a through hole (36) in said cutting insert (30) and to be in threaded engagement with a screw hole (16) in the bottom surface (12) of said at least one the insert seat (10).

19. A rotary cutting tool according to claim 17 or 18, wherein the rotary cutting tool (1; 1') is a milling tool.
